# EUROPÄISCHE PATENTSCHRIFT

(11) **EP 0 894 152 B1**
(45) Veröffentlichungstag und Bekanntmachung des Hinweises auf die Patenterteilung: **24.05.2000**
(21) Anmeldenummer: 97907046.3
(22) Anmeldetag: 27.02.1997
(51) Int. Cl.: C22C 38/22, C22C 38/24

(54) **VERFAHREN ZUR HERSTELLUNG VON POLYURETHANFORMTEILEN**
PROCESS FOR PRODUCING POLYURETHANE MOULDINGS
PROCEDE POUR LA PRODUCTION DE PIECES MOULEES EN POLYURETHANE

(30) Priorität: 12.03.1996 DE 19609610; 27.11.1996 DE 19649111
(43) Veröffentlichungstag der Anmeldung: 03.02.1999
(73) Patentinhaber: BAYER AG, 51368 Leverkusen (DE)
(72) Erfinder: RASSHOFER, Werner, D-51061 Köln (DE); MÜLLER, Henry, D-51107 Köln (DE); SYMANNEK, Achim, D-42799 Leichlingen (DE)
(74) Vertreter: Schumacher, Günter, Dr.
(86) Internationale Anmeldenummer: EP9700952
(87) Internationale Veröffentlichungsnummer: WO9734021

(56) Entgegenhaltungen:
- EP-A- 0 257 262
- EP-A- 0 709 481
- PATENT ABSTRACTS OF JAPAN vol. 15, no. 263 (C-847), 4.Juli 1991 & JP 03 090539 A (HITACHI METALS LTD.), 16.April 1991,
- PATENT ABSTRACTS OF JAPAN vol. 12, no. 056 (C-477), 19.Februar 1988 & JP 62 202050 A (KOBE STEEL LTD.), 5.September 1987,
- PATENT ABSTRACTS OF JAPAN vol. 18, no. 533 (C-1259), 11.Oktober 1994 & JP 06 184695 A (HITACHI LTD.), 5.Juli 1994,
- PATENT ABSTRACTS OF JAPAN vol. 16, no. 362 (C-971), 5.August 1992 & JP 04 116139 A (NKK CORP.), 16.April 1992,

## Beschreibung

Die Anmeldung betrifft ein verbessertes Verfahren zur Herstellung von Polyurethanformteilen, wobei eine Vorrichtung zur Herstellung von Polyurethanformteilen eingesetzt wird, deren innere Oberflächen ganz oder teilweise aus nachstehend näher definiertem Stahl bestehen.

Zur Herstellung von Kunststoffteilen, insbesondere Polyurethanartikeln, ist es Stand der Technik, daß Formtrennmittel verwendet werden, die die Entnahme von Artikeln aus dem Werkzeug erlauben. Dies sind in der Regel Wachse, Silikone oder Seifen, gelöst/dispergiert in Wasser und/oder organischen Lösungsmitteln. Seit langer Zeit ist es Gegenstand außerordentlicher Anstrengungen, den Gebrauch von Trennmitteln zu vermindern oder ganz auszuschließen. Hierfür gibt es eine ganze Reihe von dem Fachmann bekannten Gründen:
- Kosten des Trennmittels
- Zeitaufwand und Zyklusverlängerung durch Eintrennvorgang
- Vorsichtsmaßnahmen beim Gebrauch des Trennmittels (Aerosole)
- Kosten für die nachträgliche Entfernung der Trennmittel durch Verfahren wie "powerwash" oder Sandstrahlen usw.

Die Mehrzahl der bisher vorgeschlagenen Lösungen zielt auf den Gebrauch sogenannter interner Trennmittel ab, die dem Kunststoff(vorläufer)gemisch vor der Injektion in das Werkzeug diesem einverleibt werden und für eine verbesserte Trennwirkung sorgen sollen. Hier sind in der Tat bei ausgewählten Polyurethankunststoffen einige Verbesserungen erzielt worden. Bekannt sind eine Vielzahl von Anmeldungen zur Verwendung interner Trennmittel. Beispiele hierfür sind z.B. in Oertel (Herausgeber), Kunststoffhandbuch Bd. VII, Polyurethane, erschienen im Hanser-Verlag, nachzulesen. Auch hier ist oft die Unterstützung der internen Trennwirkung durch einen geringen Einsatz von externen Trennmitteln nötig und damit eine Nachbehandlung, z.B. wenn lackiert werden soll, notwendig. Innere Trennmittel können gegebenenfalls ausschwitzen und so die Dauergebrauchseigenschaften vermindern. Andererseits gibt es Fälle, wo keine internen Trennmittel verwendet werden können, so im Falle von metallischen Einlegern, die feste Haftung zeigen müssen, z.B. umschäumte Metallenkräder.

Bekannt sind auch Vorschläge zur Verbesserung des Werkzeugmaterials. Bekannt ist aus Arbeiten von Menges u.a. (Kunststofftechnik 13 (1974), Nr.9/10, S.181 ff), daß Aluminium ein wesentlich verbessertes Trennverhalten, also weniger Haftung, für Polyurethane aufweise als Stahlwerkzeuge. Aluminiumwerkzeuge können aber für Massenproduktionen nicht verwendet werden, da sie nicht verschleißfest genug sind. Auch Keramikwerkzeuge sind zur verbesserten Trennung vorgeschlagen worden, ferner silikonisierte, galvanisierte, vernickelte, verchromte, mit PTFE überzogene etc. Werkzeuge. Mit Überzügen versehene Werkzeuge können, wenn überhaupt, bei Beschädigungen nur äußerst aufwendig repariert werden. Von keiner dieser Modifizierungen von Stahloberflächen ist bekannt geworden, daß sie Einzug in die industrielle Praxis gefunden hätten.

Insgesamt besteht nach wie vor ein sehr großer Bedarf nach der trennmittelfreien oder zumindest trennmittel armen Herstellung von Polyurethanformteilen. Dafür werden wirtschaftliche, ökologische und arbeitshygienische Gründe ins Feld geführt.

Es war also Aufgabe der vorliegenden Erfindung, ein Verfahren zur Verfügung zu stellen, das ein verbessertes Trennverhalten für Kunststoffteile aus Polyurethankunststoff erlaubt und die verbesserte Herstellung von Formartikeln ermöglicht.

Überraschenderweise wurde gefunden, daß ein Trennungsverhalten erreicht werden kann, das das aller bisher bekannten Verfahren bei weitem übertrifft, wenn die Herstellung der Formartikel in Werkzeugen erfolgt, deren innere Oberflächen ganz oder teilweise aus ggfs. nitriertem Stahl der prozentualen Zusammensetzung
a) Fe: < 100 Gew.-%
b) mindestens einem Element aus der Gruppe
   W: 0 bis 40 Gew.-%, bevorzugt 2 bis 30 Gew.-%, besonders bevorzugt 3 bis 10 Gew.-%
   Mo: 0 bis 12 Gew.-%, bevorzugt 0,1 bis 5 Gew.-%, besonders bevorzugt 0,5 bis 2 Gew.-%
   V: 0 bis 5 Gew.-%, bevorzugt 0,5 bis 4 Gew.-%, besonders bevorzugt 1 bis 3 Gew.-%
c) mindestens einem Element aus der Gruppe
   Cr: 0 bis 15 Gew.-%, bevorzugt 1 bis 6 Gew.-%,
   Al: 0 bis 15 Gew.Gew.-%
d) C: 0,1 bis 1,5 Gew.-%, bevorzugt 0,15 bis 1,0 Gew.-% ferner gegebenenfalls
e) Co: 0 bis 10 Gew.-%, bevorzugt 2 bis 8 Gew.-%, besonders bevorzugt 4 bis 6 Gew.-%
   und andere Elemente wie S, Ti, Ni, sowie gegebenenfalls
f) N: 0 bis 10 Gew.-% N in einer Nitrierungsschicht

### bestehen.

Gegenstand der vorliegenden Erfindung ist also ein Verfahren zur Herstellung von Polyurethanformteilen, dadurch gekennzeichnet, daß ihre Herstellung ohne Applikation externer Trennmittel in Werkzeugen erfolgt, deren innere Metalloberfläche(n) aus Stahl der prozentualen Zusammensetzung
a) Fe: < 100 Gew.-%
b) mind. einem Element aus der Gruppe W, Mo, V mit einem Gehalt an
   W: 0 bis 40 Gew.-%, bevorzugt 2 bis 30 Gew.-%, besonders bevorzugt 3 bis 10 Gew.-%
   Mo: 0 bis 12 Gew.-%, bevorzugt 0,1 bis 5 Gew.-%, besonders bevorzugt 0,5 bis 2 Gew.-%
   V: 0 bis 5 Gew.-%, bevorzugt 0,5 bis 4 Gew.-%, besonders bevorzugt 1 bis 3 Gew.-%
c) mind. einem Element aus der Gruppe Cr, Al mit einem Gehalt an
   Cr: 0 bis 15 Gew.-%, bevorzugt 1 bis 6 Gew.-%,
   Al: 0 bis 15 Gew.Gew.-%
d) gegebenenfalls mit Kohlenstoff mit einem Gehalt von
   C: 0,1 bis 1,5 Gew.-%, bevorzugt 0,15 bis 1,0 Gew.-%
e) gegebenenfalls mit Kobalt mit einem Gehalt von
   Co: 0 bis 10 Gew.-%, bevorzugt 2 bis 8 Gew.-%, besonders bevorzugt 4 bis 6 Gew.-%
   und andere Elemente wie S, Ti, Ni, sowie
f) gegebenenfalls mit Stickstoff mit einem Gehalt von
   N: 0 bis 10 Gew.-% N in einer Nitrierungsschicht
bestehen.

Weiterer Gegenstand der vorliegenden Erfindung ist ein Verfahren zur Herstellung von Polyurethanformteilen aus
A) Polyisocyanaten und
B) Verbindungen mit mindestens zwei gegenüber Isocyanaten reaktionsfähigen Wasserstoffatomen und einem Molekulargewicht von 60 bis 2.000, gegebenenfalls in Gegenwart von Kettenverlängerungs- und/oder Vernetzungsmitteln, Treibmitteln sowie weiteren Hilfs-und Zusatzstoffen, dadurch gekennzeichnet, daß ihre Herstellung ohne Applikation externer Trennmittel in Werkzeugen erfolgt, deren innere Metalloberfläche(n) aus Stahl der prozentualen Zusammensetzung
   a) Fe: < 100 Gew.-%
   b) mindestens einem Element aus der Gruppe
      W: 0 bis 40 Gew.-%, bevorzugt 2 bis 30 Gew.-%, besonders bevorzugt 3 bis 10 Gew.-%
      Mo: 0 bis 12 Gew.-%, bevorzugt 0,1 bis 5 Gew.-%, besonders bevorzugt 0,5 bis 2 Gew.-%
      V: 0 bis 5 Gew.-%, bevorzugt 0,5 bis 4 Gew.-%, besonders bevorzugt 1 bis 3 Gew.-%
   c) mind. einem Element aus der Gruppe
      Cr: 0 bis 15 Gew.-%, bevorzugt 1 bis 6 Gew.-%,
      Al: 0 bis 15 Gew.Gew.-%
   d) C: 0,1 bis 1,5 Gew.-%, bevorzugt 0,15 bis 1,0 Gew.-% ferner gegebenenfalls
   e) Co: 0 bis 10 Gew.-%, bevorzugt 2 bis 8 Gew.-%, besonders bevorzugt 4 bis 6 Gew.-% und andere Elemente wie S, Ti, Ni, sowie
   f) N: 0 bis 10 Gew.-% N in der gegebenenfalls Nitrierungsschicht
bestehen.

Die Verwendung solcher Stähle bietet folgende überraschenden Vorteile:
- Besonders überraschend ist, daß auch sogenannte EMR-Polyurethane, also PUR-Harze, die mit externen Trennmitteln verarbeitet werden und keine internen Trennmittel enthalten, jetzt ohne Applikation von Trennmitteln verarbeitet werden können.
- Ebenfalls besonders überraschend ist, daß auch geschäumte Polyurethane mit niedriger Dichte jetzt ohne Applikation von Trennmitteln verarbeitet werden können.
- Besonders überraschend ist auch der Befund, daß die Werkzeug-Temperaturen deutlich gesenkt werden können. Durch diese Senkung der Werkzeugtemperatur wird auch der Losschrumpfvorgang verstärkt, der die Entnahme des Artikels erleichtert.
- Überraschend ist, daß der erfindungsgemäße, dem Fachmann an sich bekannte Stahl diese Wirkung hat, während Versuche, auch solche der Anmelderin, mit verchromtem oder vernickelten Werkzeugen zu einer verbesserten Trennung zu gelangen, scheiterten (unabhängig vom Reparaturproblem solcher metallisierter Oberflächen).
- Die Erfmdungsgemäße Lösung führt zu einer kostengünstigen Fertigung von Polyurethanteilen, da Eintrennvorgänge und Nachbehandlungen ganz oder zum großen Teil wegfallen können.

Geeignete Ausgangsmaterialien zur Herstellung von Formartikeln in Werkzeugen aus solchen Stählen sind Polyurethane/Polyharnstoffe und andere Produkte der Isocyanat-Polyadditionschemie.

Für die Durchführung des erfindungsgemäßen Verfahrens zur Herstellung von Polyurethanformteilen werden eingesetzt Polyisocyanate A):
1. Als Ausgangskomponenten aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

Q (NCO)ₙ

in der
- n: = 2-4, vorzugsweise 2, und
- Q: einen aliphatischen Kohlenwasserstoffrest mit 2-18, vorzugsweise 6-10 C-Atomen, einen cycloaliphatischen Kohlenwasserstoffrest mit 4-15, vorzugsweise 5-10 C-Atomen, einen aromatischen Kohlenwasserstoffrest mit 6-15, vorzugsweise 6-13 C-Atomen, oder einen aralipliatischen Kohlenwasserstoffrest mit 8-15, vorzugsweise 8 - 13 C-Atomen, bedeuten,
z.B. 1,4-Tetramethylen-diisocyanat, 1,6-Hexamethvlendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-tri-methyl-5-isocyanatomethyl-cyclohexan (DE-Auslegeschrift 1 202 785, US-Patentschrift 3 401 190), 2,4-und 2,6-Hexahydrotoluylendiisocyanat sowie beliebige Gemische dieser Isomeren, Hexahydro-1,3- und/oder -1,4-phenylen-diisocyanat, Perhydro-2,4'- und/oder -4,4'-diphenyl-methan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat.

Ferner kommen beispielsweise erfindungsgemäß in Frage: Triphenylmethan-4,4',4"-triisocyanat, Polyphenyl-polymethylen-polyisocyanate, wie sie durch Anilin-Formaldehyd-Kondensation und anschließende Phosgenierung erhalten und z.B. in den GB-Patentschriften 874 430 und 848 671 beschrieben werden, m- und p-Isocyanatophenylsulfonyl-isocyanate gemäß der US-Patentschrift 3 454 606, perchlorierte Arylpolyisocyanate, wie sie z.B. in der DE-Auslegeschrift 1 157 601 (US-Patentschrift 3 277 138) beschrieben werden, Carbodiimidgruppen aufweisende Polyisocyanate, wie sie in der DE-Patentschrift 1 092 007 (US-Patentschrift 3 152 162) sowie in den DE-Offenlegungsschriften 2 504 400, 2 537 685 und 2 552 350 beschrieben werden, Norbornan-diisocyanate gemäß US-Patentschrift 3 492 301, Allophanatgruppen aufweisende Polyisocyanate, wie sie z.B. in der GB-Patentschrift 994 890, der BE-Patentschrift 761 626 und der NL-Patentanmeldung 7 102 524 beschrieben werden, Isocyanuratgruppen aufweisende Polyisocyanate, wie sie z.B. in der US-Patentschrift 3 001 9731, in den DE-Patentschriften 1 022 7890 1 222 067 und 1 929 034 und 2 004 048 beschrieben werden, Urethangruppen aufweisende Polyisocyanate, wie sie z.B. in der BE-Patentschrift 752 261 oder in den US-Patentschriften 3 394 164 und 3 644 457 beschrieben werden, acylierte Harnstoffgruppen aufweisende Polyisocyanate gemäß der DE-Patentschrift 1 230 778, Biuretgruppen aufweisende Polyisocyanate, wie sie z.B. in den US-Patentschriften 3 124 605, 3 201 372 und 3 124 605 sowie in der GB-Patentschrift 889 050 beschrieben werden, durch Telomerisationsreaktionen hergestellte Polyisocyanate, wie sie z.B. in der US-Patentschrift 3 654 106 beschrieben werden, Estergruppen aufweisende Polyisocyanate, wie sie z.B. in den GB-Patentschriften 965 474 und 1 072 956, in der US-Patentschrift 3 567 763 und in der DE-Patentschrift 1 231 688 genannt werden, Umsetzungsprodukte der obengenannten Isocyanate mit Acetalen gemäß der DE-Patentschrift 1 072 385 und polymere Fettsäureester enthaltende Polyisocyanate gemäß der US-Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

### Bevorzugte Polyisocyanate sind:

Besonders bevorzugt werden in der Regel die technisch leicht zugänglichen Polyisocyanate, z.B. das 2,4- und 2,6-Toluylendiisocyanat sowie beliebige Gemische dieser Isomeren ("TDI"), Polyphenyl-polymethylen-polyisocyanate, wie sie durch Anilin-Formaldehyd-Kondensation und anschließende Phosgenierung hergestellt, werden ("rohes MDI") und Carbodiimidgruppen, Urethangrupppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

### Komponente B)

Bei der Komponente B1) handelt es sich um Verbindungen mit gegenüber Isocyanatgruppen reaktionsfähigen Gruppen des Molekulargewichtsbereichs 1.800 bis 12.000, vorzugsweise 3.000 bis 7.000 oder um Gemische derartiger Verbindungen, wobei die Komponente b) im Sinne der Isocyanat-Additionsreaktion eine ber 2,5, vorzugsweise bei 2,6 bis 3,0 und besonders bevorzugt bei 2,8 bis 3,0, liegende (mittlere) Funktionalität aufweist. Besonders gut als Komponente b) geeignete Verbindungen sind, diesen Ausführungen entsprechende Polyetherpolyole bzw. Gemische von Polyetherpolyolen wie sie in DE-AS 2 622 951, Kolonne 6, Zeile 65 - Kolonne 7, Zeile 47, offenbart sind, wobei auch erfindungsgemäß solche Polyetherpolyole bevorzugt sind, deren Hydroxylgruppen zumindest zu 50 Gew.-% vorzugsweise zumindest zu 80 Gew.-% aus primären Hydroxylgruppen bestehen. Auch die in DE-AS 2 622 951 beispielhaft offenbarten, Hydroxylgruppen aufweisenden Polyester, Polythioether, Polyacetale, Polycarbonate oder Polyesteramide sind im Prinzip als erfindungsgemäße Komponente b) geeignet, sofern sie den oben gemachten Ausführungen entsprechen, jedoch gegenüber den Polyetherpolyolen weniger bevorzugt.

Als Ausgangskomponente Bl) ebenfalls gut geeignet sind, obigen Ausführungen entsprechende, Aminopolyether oder Gemische von Aminopolyethern, d.h. Polyether mit gegenüber Isocyanatgruppen reaktionsfähigen Gruppen, die sich zumindest zu 50 Äquivalent-%, vorzugsweise zumindest zu 80 Äquivalent-% aus primären und/oder sekundären, aromatisch oder aliphatisch, vorzugsweise aromatisch gebundenen Aminogruppen und zum Rest aus primären und/oder sekundären, aliphatisch gebundenen Hydroxylgruppen zusammensetzen. Geeignete derartige Amino-polyether sind beispielsweise die in EP-B-00 81 701, Kolonne 4, Zeile 26 bis Kolonne 5, Zeile 40, genannten Verbindungen.

Ebenfalls als Ausgangskomponente B1) geeignet, jedoch weniger bevorzugt, sind Aminogruppen aufweisende Polyester des obengenannten Molekulargewichtsbereichs.

Als Komponente B1) können selbstverständlich auch beliebige Gemische der beispielhaft genannten Polyhydroxylverbindungen mit den beispielhaft genannten Aminopolyethern verwendet werden.

### Komponente B2)

Bei den gegebenenfalls mitzuverwendenden Polyolen oder Polyaminen handelt es sich um beliebige nicht-aromatische Verbindungen mit mindestens zwei gegenüber Isocyanatgruppen reaktionsfähigen Gruppen des Molekulargewichtsbereichs 18, 60 bis 1799, vorzugsweise 60 bis 500, insbesondere 62 bis 400. In Betracht kommen beispielsweise mehrwertige Alkohole wie sie in EP-B-00 81 701, Kolonne 9, Zeilen 32 bis 50, offenbart sind; insbesondere sind als Komponenten B2) folgende Alkohole bevorzugt: EG, DEG, TEG, PG, DPG, TPG, Butandiol, Hexandiol. Ferner in Betracht kommen beispielsweise auch Ethergruppen aufweisende aliphatische Polyamine, beispielsweise endständige primäre Aminogruppen aufweisende Polypropylenoxide des genannten Molekulargewichtsbereichs. In Betracht kommen auch cycloaliphatische Ringe aufweisende Polyole wie beispielsweise 1,4-Dihydroxycyclohexan oder 1,4-Bis-hydroxymethyl-cyclohexan und Polyamine wie beispiels-weise 1,4-Cyclohexan-diamin, Isophorondiamin, Bis-(4-aminocyclo-hexyl)-methan, Bis-(3-methyl-4-aminocyclohexyl)-methan. Polyole sind gegenüber Polyaminen bevorzugt.

### Komponente B3)

Bei der gegebenenfalls als weitere Aufbaukomponenten B3) mitzuverwendenden Diaminen handelt es sich um aromatische Diamine der in EP-B-00 81 701, Kolonne 5, Zeile 58 bis Kolonne 6, Zeile 34, beispielhaft genannten Art, wobei auch erfindungsgemäß die dort als bevorzugt herausgestellten Diamine bevorzugt sind.

Bei den bei der Herstellung der Polyisocyanat-Polyadditionsprodukte gegebenenfalls mitzuverwendenden Hilfs- und Zusatzmitteln B4) handelt es sich beispielsweise um innere Formtrennmittel, falls noch nötig, Katalysatoren für die Polyisocyanat-Polyadditionsreaktion, Treibmittel, Wasser, oberflächenaktive Zusatzstoffe, Zellregler, organische und anorganische Pigmente, Farbstoffe, UV- und Thermo-Stabilisatoren, Weichmacher oder fungistatisch bzw. bakteriostatisch wirkende Substanzen, wie sie beispielsweise in EP-B-00 81 701, Kolonne 6, Zeile 40 bis Kolonne 9, Zeile 31, beispielhaft beschrieben sind.

Zu den gegebenenfalls mitzuverwendenden Hilfs- und Zusatzstoffen gehören die an sich bekannten Füll- und/oder Verstärkungsstoffe wie beispielsweise Bariumsulfat, Kieselgur, Schlämmkreide, Mica oder insbesondere Glasfasern, LC-Fasern, Glasflakes, Glaskugeln, Aramid- oder Kohlefasern,

### Durchführung des erfindungsgemäßen Verfahrens:

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-Patentschrift 2 764 565 beschrieben werden. Einzelheiten über Verarbeitungseinrichtungen, die auch erfindungsgemäß infrage kommen, werden im Kunststoff-Handbuch, Band VII, herausgegeben von Vieweg und Höchtlen", Carl-Hanser-Verlag, München 1966, z.B. auf den Seiten 121 bis 205 beschrieben.

Ein weiterer Gegenstand der Erfindung ist die Verwendung einer Vorrichtung zur Durchführung des oben beschriebenen erfindungsgemäßen Verfahrens.

Erfindungsgemäß besteht die Vorrichtung aus Stahl der prozentualen Zusammensetzung
a) Fe: < 100 Gew.-%
b) mindestens einem Element aus der Gruppe
   W: 0 bis 40 Gew.-%, bevorzugt 2 bis 30 Gew.-%, besonders bevorzugt 3 bis 10 Gew.-%
   Mo: 0 bis 12 Gew.-%, bevorzugt 0,1 bis 5 Gew.-%, besonders bevorzugt 0,5 bis 2 Gew.-%
   V: 0 bis 5 Gew.-%, bevorzugt 0,5 bis 4 Gew.-%, besonders bevorzugt 1 bis 3 Gew.-%
c) mind. einem Element aus der Gruppe
   Cr: 0 bis 15 Gew.-%, bevorzugt 1 bis 6 Gew.-%,
   Al: 0 bis 15 Gew.-%
d) C: 0,1 bis 1,5 Gew.-%, bevorzugt 0,15 bis 1,0 Gew.-% ferner gegebenenfalls
e) Co: 0 bis 10 Gew.-%, bevorzugt 2 bis 8 Gew.-%, besonders bevorzugt 4 bis 6 Gew.-%
   und andere Elemente wie S, Ti, Ni, sowie gegebenenfalls
f) N: 0 bis 10 Gew.-% N in einer Nitrierungsschicht.

Durch die gegebenenfalls durchgeführte nitrierende Oberflächenbehandlung des Stahles kann die Wechselwirkung zwischen Metalloberflächenatomen und reaktiven Gruppen der einzusetzenden Harze und Reaktivharze verringert oder vermieden werden. Die nitrierende Behandlung führt zu einer weiteren Steigerung der Oberflächenhärte.

Solche gegebenenfalls bereits vergüteten Stähle sind dem Fachmann an und für sich bekannt, insbesondere auch Nitrierstahl-Sorten nach DIN 17 007. Diese werden gegebenenfalls dem bekannten Oberflächenmodifizierungsverfahren der Nitrierung als Salzbadnitrierung, Gas(phasen)- oder Plasmanitrierung und Iononitrierung unterworfen.

### Geeignete Ausgangsstähle und diese Verfahren sind z.B. in

Lehrheft zum Selbststudium der DAG-Technikum, Essen 1982, Werkstoffkunde, Heft 4, Seiten 34f
Lehrheft zum Selbststudium der DAG-Technikum, Essen 1982, Werkstoffkunde, Heft 2, Seiten 25f
Fachkunde Metall, Europa-Verlag, 48.Auflage 1987,
Tabellenbuch Metall, Europa-Verlag, 38.Auflage, S.106
Werkstoffkunde für Praktiker, Europa-Verlag, 2.Auflage 1985, S.60
beschrieben.

Sie können gegebenenfalls einer weiteren mechanischen Oberflächenbehandlung durch Polieren etc. unterworfen werden.

Die erfindungsgemäß hergestellten Produkte finden z.B. folgende Anwendungen: Möbelpolsterungen, Textileinlagen, Matratzen, Automobilsitze, Armlehnen, Schwämme und Bauelemente, Sitz- und Armaturverkleidungen, Fahrzeug-Karosserieelemente, Trägerbausteine, Türinnenverkleidungen, Lenkräder, Gehäuse aller Art.

### Beispiele:

### Beispiel 1: Trennungsversuch mit einem IMR-Material

### Bayflex 110 IMR: VP.PU 767 AX 505 BX/Desmodur PA 09

### Polyol-Komponente:

67.40 Tle eines Polyethers der OH-Zahl 35, erhalten durch blockweise Addition von zuerst 87 Gew.-% Propylenoxid und dann 13 Gew.-% Ethylenoxid an Trimethyolpropan

2 Tle eines Polyricinolsäureesters mit einer < 5 liegenden Säurezahl

4.7 Tle eines 2:1:1-Gemisches aus 24 Tle eines Gemisches aus 65 Tlen 1-Methyl-3,5-diethyl-2,4-diamino-benzol und 35 Tlen 1-Methyl-3,5-diethyl-2,6-diaminobenzol, Zinkstearat und Bis-(3-dimethylaminopropyl)-amin
0.7 Tle eines aminischen Katalysators der Air Products
0.1 Tle eines Zinnkatalysators der Witco
0.1 Tle eines Siloxanstabilisators der Goldschmidt AG

100 Tle dieser Polyolformulierung werden mit 66,2 Tlen. eines urethanmodifizierten MDI's des NCO-Gehaltes 24.5 Gew.-% verarbeitet. Dichte der Platte = ca. 1 l/kg.

Ergebnis: keine Haftung am erfindungswesentlichen Stahl, kein Ende der Versuchsserie absehbar.

### Beispiel 2: Trennungsversuch mit EMR-Materialien

### Bayflex 110 EMR: VP.PW 505 BX/Desmodur PA 09

### Polyol-Komponente:

76.60 Tle eines Polyethers der OH-Zahl 27, erhalten durch blockweise Addition von zuerst 87 Gew.-% Propylenoxid und dann 13 Gew.-% Ethylenoxid an Trimethyolpropan

21 Tle eines Gemisches aus 65 Tlen 1-Methyl-3,5-diethyl-2,4-diamino-benzol und 35 Tlen 1-Methyl-3,5-diethyl-2,6-diamino-benzol
0.3 Tle eines aminischen Katalysators der Air Products
0.1 Tle eines Zinnkatalysators der Witco

4,5 Tle eines Adduktes von Propylenoxid and Ethylendiamin mit einer OH-Zahl von 1600 mgKOH/g

100 Tle dieser Polyolformulierung werden mit 56,7 Tlen. eines urethanmodifizierten MDI's des NCO-Gehaltes 24.5 Gew.-% verarbeitet. Dichte der Platte = ca. 1 l/kg.

Ergebnis: keine Haftung am erfindungswesentlichen Stahl, kein Ende der Versuchsserie absehbar.

### Beispiel 3: Trennungsversuch mit EMR-Materialien

### Baydur®-Integralhartschaum

### Polyol-Komponente:

38.10 Tle eines Polyethers der OH-Zahl 27, erhalten durch blockweise Addition von zuerst 87 Gew.-% Propylenoxid und dann 13 Gew.-% Ethylenoxid an Trimethyolpropan

33,60 Tle eines Polyethers der OH-Zahl 865, erhalten durch Addition von Propylenoxid an Trimethyolpropan

22,40 Tle eines Polyethers der OH-Zahl 1010, erhalten durch Addition von Propylenoxid an Trimethyolpropan

1,6 Tle eines aminischen Katalysators der Air Products

2,7 Tle ein Stabilisators auf Si-Basis

1,6 Tle Wasser

100 Tle dieser Polyolformulierung werden mit 164,4 Tlen. eines rohen MDI'S Desmodur 44V20 des NCO-Gehaltes 31.5 Gew.-% verarbeitet. Dichte = ca. 1 l/kg.

Ergebnis: keine Haftung am erfindungswesentlichen Stahl, kein Ende der Versuchsserie absehbar.

### Beispiel 4: nicht-nitrierter Nitrierstahl

### kein Unterschied zu Versuchen 1-3 erkennbar

### Beispiel 5: Vergleichsversuch: normaler Werkzeugstahl

Beim Material des Beispiels 1 ca. 30-40 Entformungen, bei den Materialien der Beipiele 2-3 2-10 Tle, danach muß jeweils eingetrennt werden.

### Beispiel 6: Vergleichsversuch: Bondur Al-Legierung

Beim Material des Beispiels 1 ca. 60-100 Entformungen, bei den Materialien der Beispiele 2 bis 3 5-30 Tle, danach muß jeweils eingetrennt werden.

## Patentansprüche

1. Verfahren zur Herstellung Polyurethanformteilen, dadurch gekennzeichnet, daß ihre Herstellung ohne Applikation externer Trennmittel in Werkzeugen erfolgt, deren innere Oberflächen aus Stahl der prozentualen Zusammensetzung
a) Fe: < 100 Gew.-%
b) mindestens einem Element aus der Gruppe W, Mo, V mit einem Gehalt an
W: 0 bis 40 Gew.-%, bevorzugt 2 bis 30 Gew.-%, besonders bevorzugt 3 bis 10 Gew.-%
Mo: 0 bis 12 Gew.-%, bevorzugt 0,1 bis 5 Gew.-%, besonders bevorzugt 0,5 bis 2 Gew.-%
V: 0 bis 5 Gew.-%, bevorzugt 0,5 bis 4 Gew.-%, besonders bevorzugt 1 bis 3 Gew.-%
c) mindestens einem Element aus der Gruppe Cr, Al mit einem Gehalt an
Cr: 0 bis 15 Gew.-%, bevorzugt 1 bis 6 Gew.-%,
Al: 0 bis 15 Gew.Gew.-%
d) gegebenenfalls mit Kohlenstoff mit einem Gehalt von
0,1 bis 1,5 Gew.-%, bevorzugt 0,15 bis 1,0 Gew.-%
e) gegebenenfalls mit Kobalt mit einem Gehalt von
0,1 bis 10 Gew.-%, bevorzugt 2 bis 8 Gew.-%, besonders bevorzugt 4 bis 6 Gew.-%
sowie gegebenenfalls mit
f) Stickstoff in einer Nitrierschicht mit
0 bis 10 Gew.-% N
bestehen.

2. Verfahren gemäß Anspruch 1, dadurch gekennzeichnet, daß die innere Oberfläche der Werkzeuge
gegebenenfalls Nickel mit einem Gehalt von Ni: >0,3 Gew.-% sowie eine Nitrierungsschicht mit
8 bis 10 Gew.-% N in der Nitrierungsschicht enthalten.

3. Verfahren gemäß einem der Ansprüche 1 bis 2, dadurch gekennzeichnet, daß Kunststofformteile durch die Umsetzung von
A) Polyisocyanaten und
B) Verbindungen mit mindestens zwei gegenüber Isocyanaten reaktionsfähigen Wasserstoffatomen und einem Molekulargewicht von 60 bis 2.000, gegebenenfalls in Gegenwart von Kettenverlängerungs- und/oder Vernetzungsmitteln, Treibmitteln sowie weiteren Hilfs-und Zusatzmitteln hergestellt werden.

4. Vorrichtung, Verwendung einer deren innere Oberflächen aus Stahl der prozentualen Zusammensetzung
a) Fe: < 100 Gew.-%
b) mindestens einem Element aus der Gruppe W, Mo, V mit einem Gehalt an
W: 0 bis 40 Gew.-%, bevorzugt 2 bis 30 Gew.-%, besonders bevorzugt 3 bis 10 Gew.-%
Mo: 0 bis 12 Gew.-%, bevorzugt 0,1 bis 5 Gew.-%, besonders bevorzugt 0,5 bis 2 Gew.-%
V: 0 bis 5 Gew.-%, bevorzugt 0,5 bis 4 Gew.-%, besonders bevorzugt 1 bis 3 Gew.-%
c) mindestens einem Element aus der Gruppe Cr, Al mit einem Gehalt an
Cr: 0 bis 15 Gew.-%, bevorzugt 1 bis 6 Gew.-%,
Al: 0 bis 15 Gew.-%
d) gegebenenfalls mit Kohlenstoff mit einem Gehalt von
0,1 bis 1,5 Gew.-%, bevorzugt 0,15 bis 1,0 Gew.-%
e) gegebenenfalls mit Kobalt mit einem Gehalt von
0,1 bis 10 Gew.-%, bevorzugt 2 bis 8 Gew.-%, besonders bevorzugt 4 bis 6 Gew.-%
sowie gegebenenfalls mit
f) Stickstoff in einer Nitrierschicht mit
0 bis 10 Gew.-% N
bestehen,
zur Herstellung von Polyurethanformteilen ohne Applikation externer Trennmittel.

## Claims

1. A process for preparing polyurethane moulded items, characterised in that they are produced in moulds, without the application of external mould release agents, in which the internal surfaces consist of steel with the percentage composition
a) Fe: < 100 wt.%
b) at least one element from the group W, Mo, V with a concentration of
W: 0 to 40 wt.%, preferably 2 to 30 wt.%, in particular 3 to 10 wt.%
Mo: 0 to 12 wt.%, preferably 0.1 to 5 wt.%, in particular 0.5 to 2 wt.%
V: 0 to 5 wt.%, preferably 0.5 to 4 wt.%, in particular 1 to 3 wt.%
c) at least one element from the group Cr, Al with a concentration of
Cr: 0 to 15 wt.%, preferably 1 to 6 wt.%,
Al: 0 to 15 wt.wt.%
d) optionally with carbon at a concentration of
0.1 to 1.5 wt.%, preferably 0.15 to 1.0 wt.%
e) optionally with cobalt at a concentration of
0.1 to 10 wt.%, preferably 2 to 8 wt.%, in particular 4 to 6 wt.%
and optionally with
f) nitrogen in a nitriding layer with
0 to 10 wt.% of nitrogen.

2. Process according to Claim 1, characterised in that the internal surface of the mould contains
optionally nickel at a concentration of Ni: >0.3 wt.% and a nitriding layer with
8 to 10 wt.% of N in the nitriding layer.

3. Process in accordance with one of Claims 1 to 2, characterised in that plastic moulded items are produced by reacting
A) polyisocyanates and
B) compounds with at least two hydrogen atoms which can react with isocyanates and which have a molecular weight of 60 to 2000, optionally in the presence of chain-lengthening and/or crosslinking agents, blowing agents and other auxiliary substances and additives.

4. Use of a device in which the internal surfaces consist of steel with the percentage composition
a) Fe: < 100 wt.%
b) at least one element from the group W, Mo, V with a concentration of
W: 0 to 40 wt.%, preferably 2 to 30 wt.%, in particular 3 to 10 wt.%
Mo: 0 to 12 wt.%, preferably 0.1 to 5 wt.%, in particular 0.5 to 2 wt.%
V: 0 to 5 wt.%, preferably 0.5 to 4 wt.%, in particular 1 to 3 wt.%
c) at least one element from the group Cr, Al with a concentration of
Cr: 0 to 15 wt.%, preferably 1 to 6 wt.%,
Al: 0 to 15 wt.%
d) optionally with carbon at a concentration of
0.1 to 1.5 wt.%, preferably 0.15 to 1.0 wt.%
e) optionally with cobalt at a concentration of
0.1 to 10 wt.%, preferably 2 to 8 wt.%, in particular 4 to 6 wt.%
and optionally with
f) nitrogen in a nitriding layer with
0 to 10 wt.% of nitrogen,
for producing polyurethane moulded items without the application of external mould release agents.

## Revendications

1. Procédé pour la fabrication d'éléments moulés en polyuréthanne, caractérisé en ce que leur fabrication a lieu sans l'application d'agents de démoulage externes dans des moules dont les surfaces internes sont constituées par de l'acier dont la composition comprend en pour cent:
a) Fe: < 100% en poids,
b) au moins un élément choisi parmi le groupe comprenant W, Mo, V avec une teneur en
W: de 0 à 40% en poids, de préférence de 2 à 30% en poids, de manière particulièrement préférée de 3 à 10% en poids,
Mo: de 0 à 12% en poids, de préférence de 0,1 à 5% en poids, de manière particulièrement préférée de 0,5 à 2% en poids,
V: de 0 à 5% en poids, de préférence de 0,5 à 4% en poids, de manière particulièrement préférée de 1 à 3% en poids,
c) au moins un élément choisi parmi le groupe comprenant Cr, Al avec une teneur en
Cr: de 0 à 15% en poids, de préférence de 1 à 6% en poids,
Al: de 0 à 15% en poids,
d) le cas échéant, avec du carbone en une teneur
de 0,1 à 1,5% en poids, de préférence de 0,15 à 1,0% en poids,
e) le cas échéant, avec du cobalt en une teneur
de 0,1 à 10% en poids, de préférence de 2 à 8% en poids, de manière particulièrement préférée de 4 à 6% en poids,
de même que, le cas échéant, avec
f) de l'azote dans une couche de nitruration en une teneur
de 0 à 10% en poids.

2. Procédé selon la revendication 1, caractérisé en ce que les surfaces internes des moules contiennent
le cas échéant, du nickel en une teneur en Ni: > 0,3% en poids, ainsi qu'une couche de nitruration avec
de 8 à 10% en poids de N dans la couche de nitruration.

3. Procédé selon l'une quelconque des revendications 1 à 2, caractérisé en ce qu'on fabrique les éléments en matière synthétique par la mise en réaction
A) de polyisocyanates et
B) de composés contenant au moins deux atomes d'hydrogène aptes à réagir vis-à-vis d'isocyanates et possédant un poids moléculaire de 60 à 2.000, le cas échéant en présence d'agents d'allongement de chaînes et/ou d'agents de réticulation, d'agents moussants et d'autres adjuvants et additifs.

4. Utilisation d'un dispositif dont les surfaces internes sont constituées par de l'acier dont la composition comprend en pour cent:
a) Fe: < 100% en poids,
b) au moins un élément choisi parmi le groupe comprenant W, Mo, V avec une teneur en
W: de 0 à 40% en poids, de préférence de 2 à 30% en poids, de manière particulièrement préférée de 3 à 10% en poids,
Mo: de 0 à 12% en poids, de préférence de 0,1 à 5% en poids, de manière particulièrement préférée de 0,5 à 2% en poids,
V: de 0 à 5% en poids, de préférence de 0,5 à 4% en poids, de manière particulièrement préférée de 1 à 3% en poids,
c) au moins un élément choisi parmi le groupe comprenant Cr, Al avec une teneur en
Cr: de 0 à 15% en poids, de préférence de 1 à 6% en poids,
Al: de 0 à 15% en poids,
d) le cas échéant, avec du carbone en une teneur
de 0,1 à 1,5% en poids, de préférence de 0,15 à 1,0% en poids,
e) le cas échéant, avec du cobalt en une teneur
de 0,1 à 10% en poids, de préférence de 2 à 8% en poids, de manière particulièrement préférée de 4 à 6% en poids,
de même que, le cas échéant, avec
f) de l'azote dans une couche de nitruration en une teneur
de 0 à 10% en poids,
pour la fabrication d'éléments moulés en polyuréthanne sans application d'agents de démoulage externes.
